# EUROPÄISCHE PATENTSCHRIFT

(11) **EP 1 029 715 B1**
(45) Veröffentlichungstag und Bekanntmachung des Hinweises auf die Patenterteilung: **21.09.2005**
(21) Anmeldenummer: 00102951.1
(22) Anmeldetag: 14.02.2000
(51) Int. Cl.: B60C 13/00, B60C 9/02, B60C 9/08

(54) **Fahrzeugluftreifen mit einer Karkasse - insbesondere radialer Bauart - mit Seitenwänden und mit einem Laufstreifen**
Vehicle tyre with a carcass, in particular radial, with sidewalls and with a tread
Bandage pneumatique pour véhicule muni d'une carcasse, en particulier radiale, de flancs et d'une bande de roulement

(30) Priorität: 18.02.1999 DE 19906658
(43) Veröffentlichungstag der Anmeldung: 23.08.2000
(73) Patentinhaber: Continental Aktiengesellschaft, 30165 Hannover (DE)
(72) Erfinder: Baumhöfer, Johannes Josef, 30900 Wedermark (DE)

(56) Entgegenhaltungen:
- EP-A- 0 407 134
- EP-A- 0 522 781
- PATENT ABSTRACTS OF JAPAN vol. 1997, no. 02, 28. Februar 1997 (1997-02-28) & JP 08 282216 A (BRIDGESTONE CORP), 29. Oktober 1996 (1996-10-29)
- PATENT ABSTRACTS OF JAPAN vol. 1995, no. 09, 31. Oktober 1995 (1995-10-31) & JP 07 164831 A (BRIDGESTONE CORP), 27. Juni 1995 (1995-06-27)

## Beschreibung

Die Erfindung betrifft einen Fahrzeugluftreifen mit einer Karkasse - insbesondere radialer Bauart -, mit Seitenwänden und mit einem Laufstreifen

Es ist bekannt, Fahrzeugluftreifen aus mehreren unterschiedlichen Schichten, beispielsweise bei Reifen radialer Bauart aus Innenschicht, Karkasse, Gürtel und Lauffläche und im Seitenbereich aus Innenschicht, Karkasse und Seitenteil von radial innen nach radial außen hin aufzubauen. Karkassen von Fahrzeugluftreifen sind üblicherweise aus einer oder mehreren Lagen von jeweils parallel zueinander in Kautschuk eingebetteten Festigkeitsträgern aufgebaut. Die einzelnen Karkassenlagen werden dabei aus durchgehenden Kautschukbändern mit parallel in Kautschukbandrichtung angeordneten Festigkeitsträgern gefertigt. Die mit den darin eingebetteten Festigkeitsträgern versehenen Kautschukbänder werden je nach gewünschter Schräglage der Festigkeitsträger zur Reifenäquatorebene im späteren Reifenaufbau üblicherweise in einzelne Stücke schräg oder bei radialem Karkassenaufbau quergeschnitten. Die schnittfreien Seiten der so erhaltenen Stücke, die zuvor bereits die Seiten des Kautschukbandes darstellten, werden dann üblicherweise zu einer durchgehenden Karkassenlage miteinander verbunden. Sobald die für den Umfang des Reifens gewünschte Karkassenlänge erreicht ist, wird die aus den einzelnen schräg- bzw. quergeschnittenen Karkassenstücken gebildete Karkassenlage auf der Wickeltrommel auf die bereits vorbereitete Innenschicht, auf eine bereits aufgelegte Karkassenschicht, oder, falls erforderlich, auf zusätzliche Zwischenschichten aufgelegt. Die Karkassenlage wird dabei um den gesamten Umfang herumgelegt und üblicherweise mit ihren Endbereichen unter Überlappung einzelner Festigkeitsträger miteinander verbunden. Anschließend werden, je nach gewünschter Ausführung, zusätzliche Karkassenschichten, Zwischenschichten, Gürtellagen und Lauffläche aufgebracht. Während des Herstellungsprozesses ist es üblich, zur Erzeugung der gewünschten Rohlingsform die mit den Karkassenlagen versehene Aufbautrommel in radialer Richtung bei der Bombage zu expandieren.

Nach der Vulkanisation und Fertigstellung des Reifens, sobald dieser für den Betriebszustand aufgepumpt wird, machen sich Verdickungsstellen, die durch die Überlappung mehrerer Festigkeitsträger im Karkassenaufbau, insbesondere in der äußeren Karkassenlage, erzeugt wurden, negativ bemerkbar. Durch die Bombage werden nämlich die Festigkeitsträger stark gedehnt und bei anschließender Vulkanisation geschrumpft, so daß sich hier besonders feste Karkassenbereiche ergeben. Sobald der Reifen im montierten Zustand mit Innendruck belastet wird, zeigt gerade dieser verfestigte Bereich ein wesentlich schwächeres Expansionsverhalten als die umgebenden Karkassenbereiche. Das abweichende Festigkeits- und Elastizitätsverhalten der Karkasse in diesen Bereichen führt zu optisch feststellbaren Einschnürungen. Insbesondere bei der Verwendung von Polyester als Festigkeitsträger der Karkasse macht sich dies besonders stark bemerkbar.

Es sind mehrfach Vorschläge gemacht worden, nach denen die durch die Überlappung entstehenden Einschnürungen gemildert oder optisch überdeckt werden sollen.

Beispielsweise wird durch die EP 0 239 160 B1 vorgeschlagen, im Bereich der Überlappung zusätzliche Spleißbänder vorzusehen. In der EP 0 407 134 B1 wid vorgeschlagen, im Überlappungsbereich zumindest im Bereich des Wulstkerns zusätzliche Gummistreifen aufzulegen, die im Kernbereich als elastische Kissen dienen sollen, so daß bei Überdruck von innen die Festigkeitsträger im Bereich der Überlappung vom Kern unter elastischer Komprimierung des Kissens nach radial außen wandern und so die Einschnürung weitgehend überdeckt werden soll. Die Qualität der Überdeckung des Einschnürverhaltens hängt dabei von der Dicke des verwendeten Gummistreifens ab. Der zusätzliche Streifen führt zum Entstehen von zusätzlichen Gleichförmigkeits-Problemen gegenüber herkömmlichen Reifen in Abhängigkeit von der Dicke des Streifens. Beiderseits des Streifens können sich zusätzlich Lufteinschlüsse zwischen der den Gummistreifen überdeckenden Schicht und der Karkassenschicht bilden in Abhängigkeit von der Dicke des Gummistreifens; Mit hohem Aufwand, beispielsweise durch zusätzliches Anrollen der Gummistreifen überdeckenden Schicht, ist ein Verteilen der Lufteinschlüsse zumindest bei dünnen Gummistreifen zwischen überdeckender Schicht und Karkasse denkbar, aber die langflächige Überdeckung der Karkassenlage durch die überdeckende Schicht verhindert ein Entfernen der Lufteinschlüsse. Soweit sie aus dem unmittelbaren Bereich des Gummistreifens verteilt wurden, bleiben sie dennoch im wesentlichen als Lufteinschlüsse zwischen Karkasse und überdeckender Schicht erhalten und führen zu zusätzlichen Problemen hinsichtlich der Haltbarkeit des Reifens. Aufgrund der hierdurch entstehenden Probleme sind zufriedenstellende Überdeckungen der Einschnürungen mit Hilfe eines derartigen zusätzlichen Gummistreifens, wenn überhaupt, nur mit hohem zusätzlichen Aufwand zur Lufteinschlußbeseitigung und zur Beseitigung der zusätzlichen Gleichförmigkeits-Probleme zu realisieren.

Ein gattungsgemäßer Fahrzeugluftreifen ist aus dem JP-A-07-164 831 bekannt.

Der Erfindung liegt die Aufgabe zugrunde einen Fahrzeugluftreifen mit einer Karkasse - insbesondere radialer Bauart -, mit Seitenwänden und mit einem Laufstreifen zu schaffen, bei dem Einschnüreffekte einfach und zuverlässig überdeckt sind.

Erfindungsgemäß wird die Aufgabe durch die Ausbildung gemäß den Merkmalen des Anspruchs1 gelöst. Die Ausbildung eines Moiree-Musters aus einer Vielzahl von linienförmigen Erhebungen, die wenigstens zwei nicht identischen Kurvenscharen zuzuordnen sind, auf dem Seitenwandgummistreifen bewirkt durch die aufgrund der Interferenzen der Linienmuster bedingte Verteilung der Intensität des reflektierten Lichtes, eine derartige Überlagerung der an der Reifenseitenwand, daß diese durch mögliche Einschürungseffekte bedingten vergleichsweise geringen Reflektionsveränderungen vom menschlichen Auge nur noch schwer wahrgenommen werden. Dies kann durch einfache Mittel im Rahmen der Reifenseitenwanddekorgestaltung verwirklicht werden. Dies kann somit ohne weitere zusätzlichen Maßnahmen in den Reifenaufbauteilen oder im Reifenaufbauprozess ermöglicht werden. Hierdurch entfallen diese bei den aus der EP 0 239 160 B1 und der EP 0 407 134 B1 bekannten Vorschlägen erforderlichen zusätzlichen Maßnahmen und die damit verbundenen Risiken.

Die Ansprüche 2 bis 20 beinhalten bevorzugte Ausgestaltungsformen der Erfindung. Neben den obengenannten Vorteilen können je nach Ausführungsform Elemente der Seitenwandbeschriftung besonders betont werden.

Die Erfindung wird im folgenden anhand der in den Fig. 1 bis 7 näher dargestellten Ausführungsbeispiele erläutert.

Hierin zeigen:
- Fig. 1: den schematischen Aufbau eines Reifens in Querschnittsdarstellung,
- Fig. 2: den schematischen Reifenaufbau in perspektivischer Darstellung,
- Fig. 3: schematische Darstellung der Lagenüberdeckung im Aufbauprozeß,
- Fig. 4: schematische Darstellung einer Seitenwand mit Moirée-Muster,
- Fig. 5: schematische Darstellung,
- Fig 6: schematische Darstellung,
- Fig. 7: schematische Darstellung.

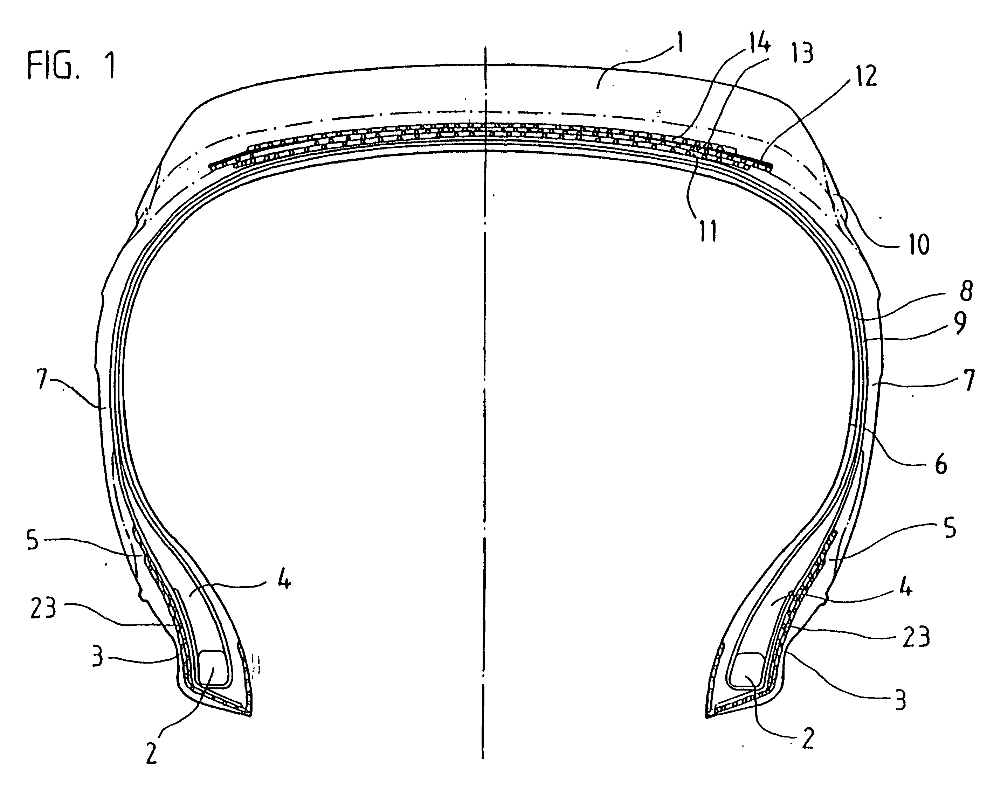

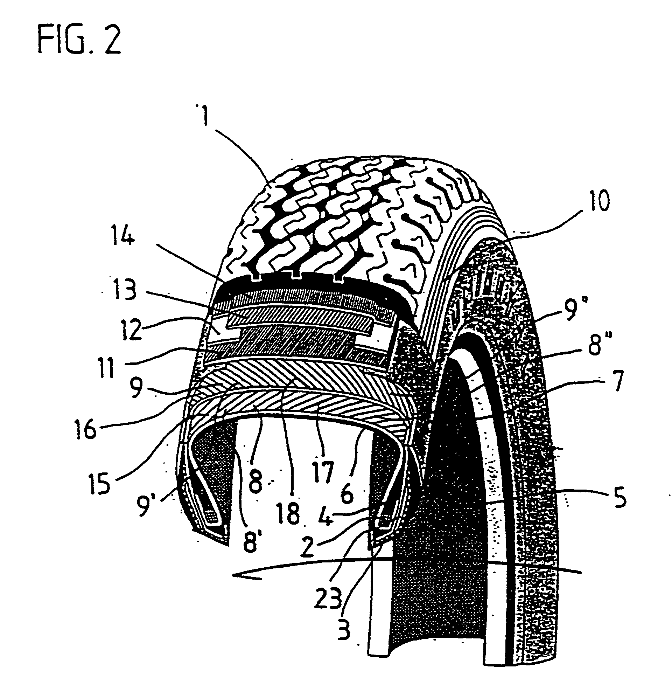

In Fig. 1 und 2 ist der Aufbau eines Fahrzeugluftreifens beispielhaft dargestellt, bei dem um einen Kern 2 mit Kernprofil 4 eine erste Karkassenlage 8 außerhalb einer dichten Innenschicht 6 über den rechten Schulterbereich und die Zenitebene zu dem linken Schulterbereich und den linken Kern 2 mit Kernprofil 4 reicht, um den er in herkömmlicher Weise gelegt ist. Über der ersten Karkassenlage 8 ist in herkömmlicher Weise eine zweite Karkassenlage 9 gelegt, die sich ebenfalls von der in Fig. 1 rechts dargestellten Seite des Reifens bis zur links dargestellten Seite erstreckt. Beide Karkassenlagen sind in herkömmlicher Weise aus einer Karkassenlagen-Kautschukmischung bekannter Art und mit darin eingebetteten, jeweils zueinander parallel liegenden, textilen Fäden 8 bzw. 9 bekannter Bauart aufgebauten Kautschukbändern hergestellt.

In bekannter Weise werden diese Kautschukbänder an einem Schneidetisch schräg geschnitten und dann mit ihren parallelen nicht geschnittenen Seiten aneinandergefügt.

Zu jeder Karkassenlage sind in Fig. 2 jeweils zwei derartige Karkassenstücke 8', 8" bzw. 9', 9" dargestellt. Das Karkassenlagenstück 8' ist an der Fügestelle 17 unter Überlappung einzelner Fäden auf das Karkassenlagenstück 8" gelegt. Ebenso ist das Karkassenlagenstück 9' an der Fügestelle 18 unter Überlappung auf das Karkassenstück 9" gelegt.

In herkömmlicher Weise ist im Ausführungsbeispiel von Fig. 2 im Kernbereich über einen Wulststreifen 23 und den Wulstverstärker 3 ein Hornprofil 5 und von diesem ausgehend bis in den Schulterbereich reichend ein Seitenstreifen 7 aufgelegt. Über den Umfang des Reifens reichen außerhalb der Karkassenlagen liegend mehrere Stahlgürtellagen 11, 13 und eine Nylonbandage 14 mit dazwischen befindlichem Gürtelkantenschutz 12 bekannter Art. Im Schulterbereich sind zusätzlich Schulterstreifen 10 aufgelegt. Den Abschluß des Reifenaufbaus bildet in bekannter Weise ein Laufstreifen 1.

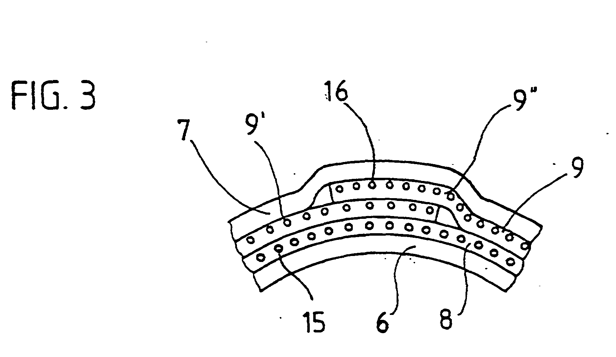

In Fig. 3 ist die Überlappungsstelle 18 in Schnittdarstellung senkrecht zu den Karkaßfäden dargestellt. Die innere Karkassenschicht 8 ist dabei in bekannter Weise mit Karkaßfäden 15 ausgebildet. Die Karkaßfäden 15 liegen in der zentralen Ebene der Karkaßlage 8. In der äußeren Karkaßlage 9 sind Karkaßfäden 16 in der zentralen Ebene der Karkassenschicht 9 eingebettet.

Bei der Bombage und der Vulkanisation werden die Karkaßfäden 16 aus Polyester stark gedehnt und anschließend wieder geschrumpft. Dabei ziehen sich die Polyesterfäden der sich überlappenden Enden 9" und 9' im Überlappungsbereich der Karkasse 9 stark zusammen. Bei der Expansion des Reifens und somit der Karkassenlage 9 in den Betriebszustand mit Überdruck im Reifen dehnen sich die Karkaßfäden 16 in diesem derart verfestigten Überlappungsbereich weniger stark als die Karkaßfäden außerhalb des Überlappungsbereiches der Karkassenenden 9', 9", so daß im Bereich der Überlappung eine Einschnürung der Seitenwand erfolgt.

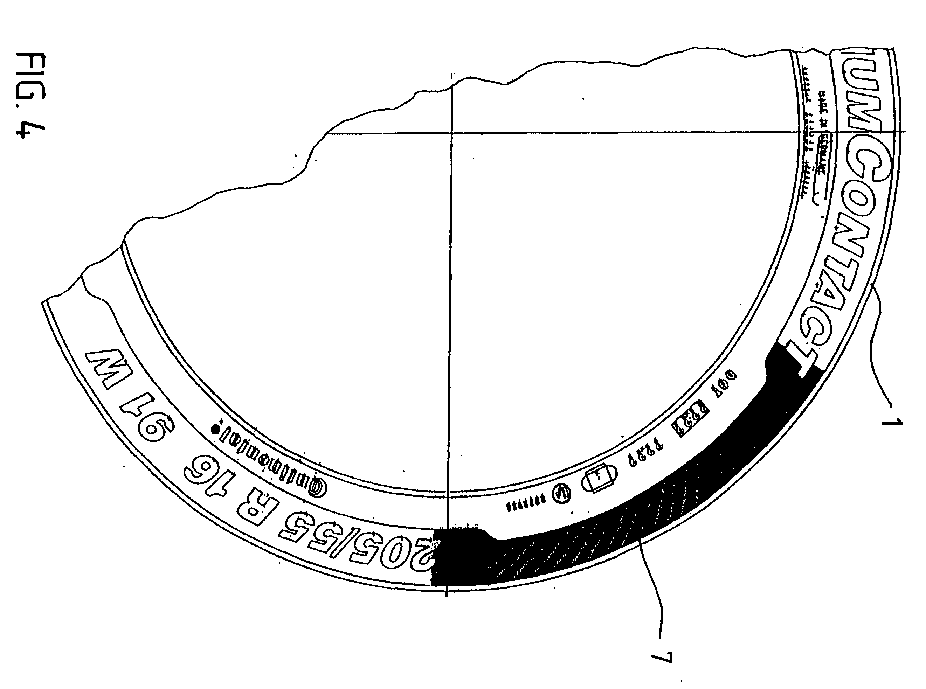

Wie in Fig. 4 dargestellt ist, ist die Reifenseitenwand auf der Außenseite des Seitenwandstreifens 7 mit einem Seitenwanddekor 30 ausgebildet. Das Seitenwanddekor 30 ist dabei ein aus zwei sich überlagernden Linienmustern gebildetes Moire-Muster. Ein Moire-Muster ist ein Interferenzbild wenigstens zweier überlagerter Linienmuster, bei dem durch Interferenz eine Helligkeitsverteilung in Form einer stehenden Welle entsteht.

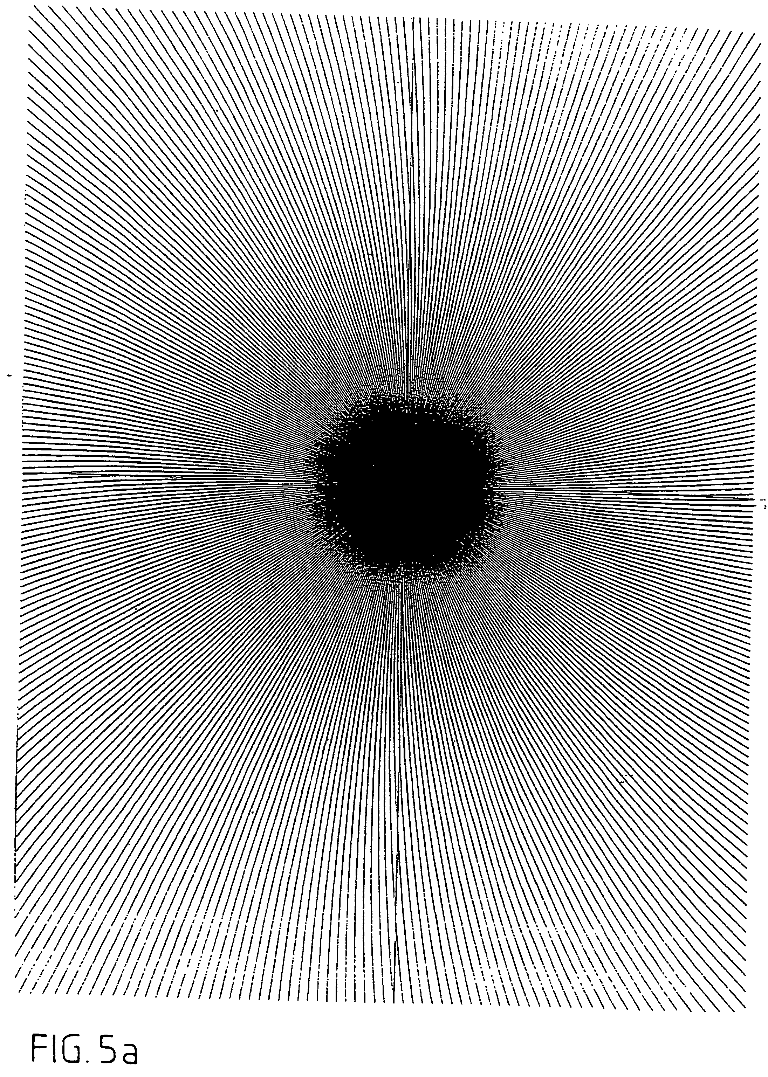

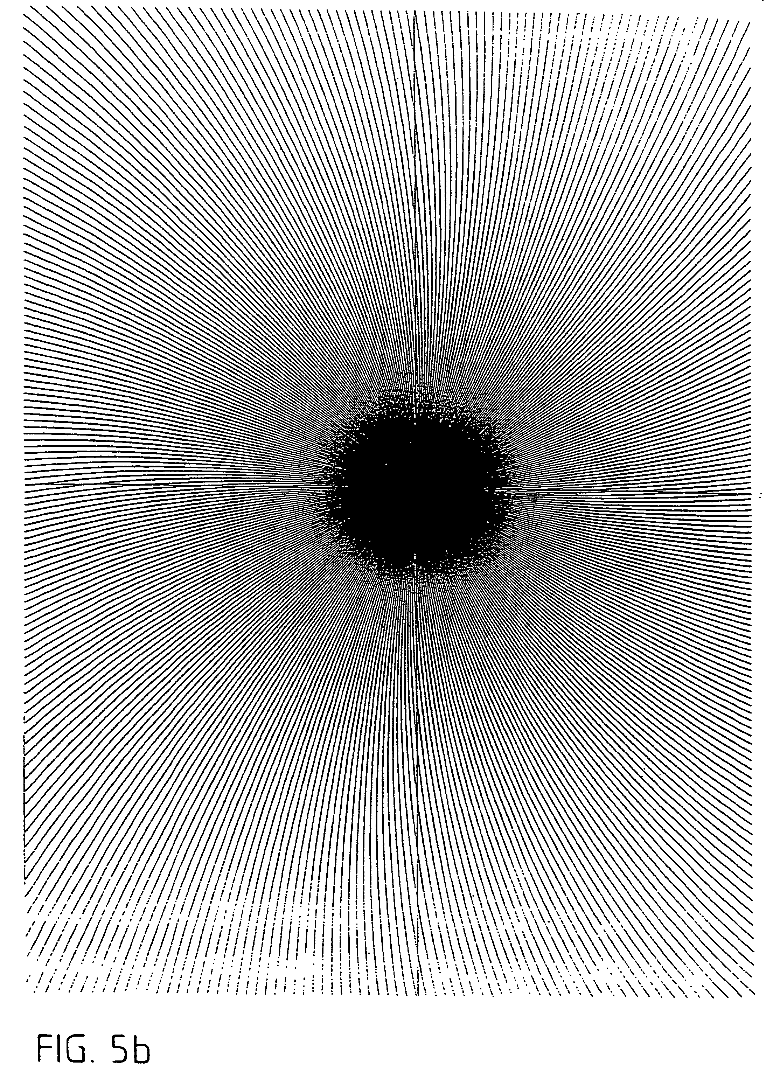

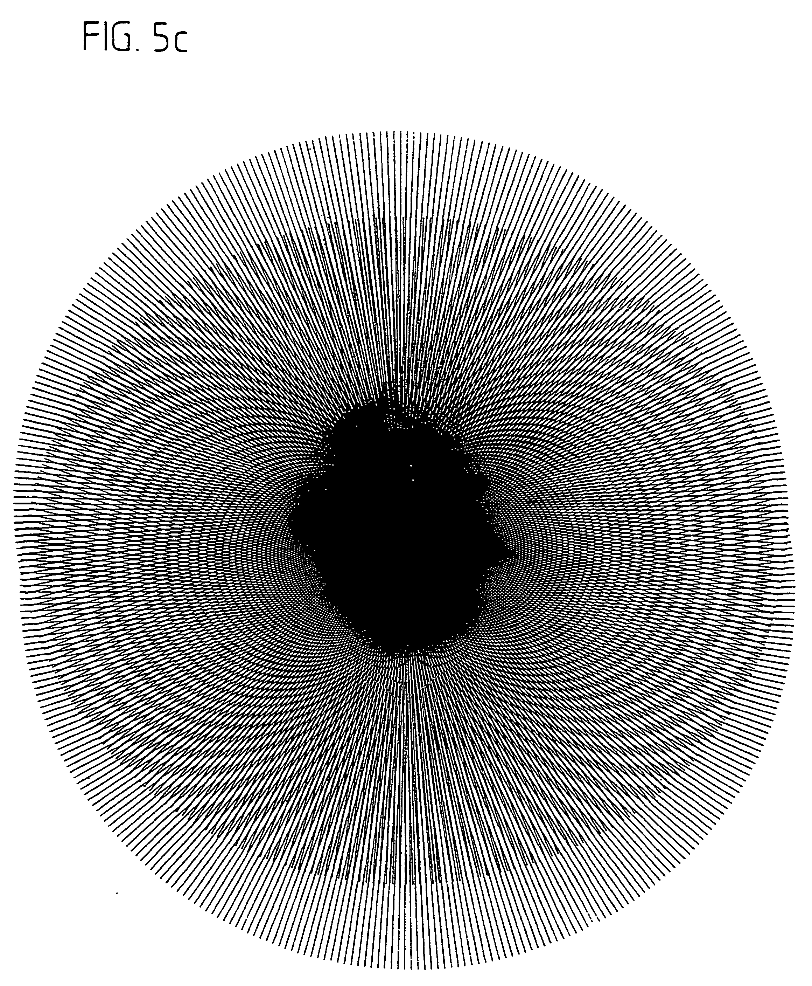

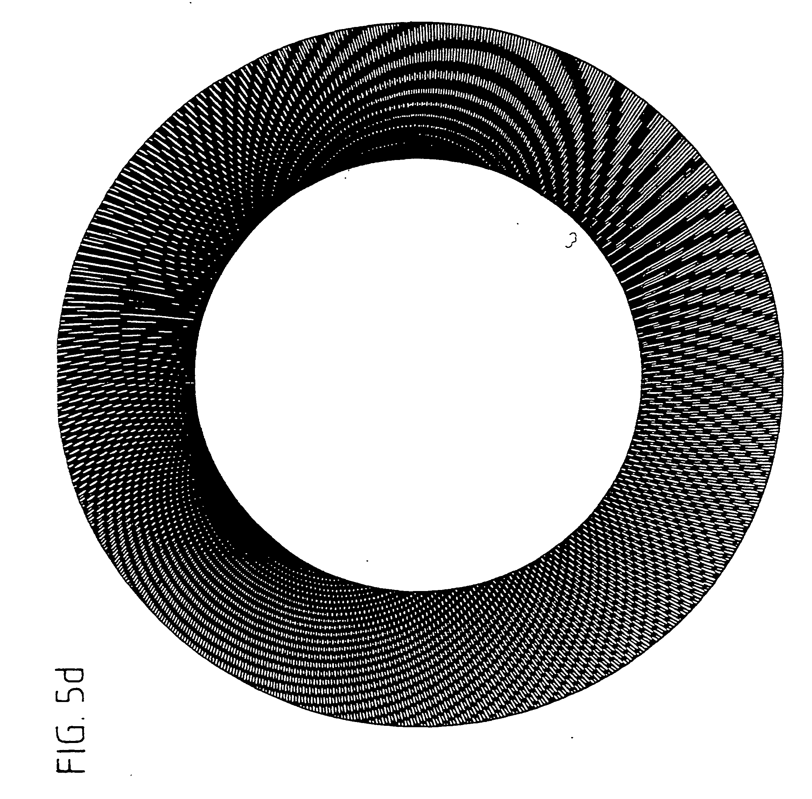

Beispielsweise zeigt Fig.5a ein erstes Linienmuster von einer ersten Kurvenschar von einer Vielzahl von jeweils mit gleichem Winkel ϕ voneinander beabstandeten strahlenförmig sich durch einen gemeinsamen ersten Strahlenmittelpunkt erstreckenden Kurven. Die Kurven sind weitgehend radial zum Strahlenmittelpunkt ausgebildet. In Fig.5a sind sie jeweils mit gleicher,konstanter Krümmung ausgebildet. Fig5b zeigt ein zweites Linienmuster von einer zweiten Kurvenschar von einer Vielzahl von jeweils mit gleichem Winkel ψ, voneinander beabstandeten strahlenförmig sich durch einen gemeinsamen zweiten Strahlenmittelpunkt erstreckenden Kurven. Die Kurven sind weitgehend radial zum Strahlenmittelpunkt ausgebildet. In Fig.5b sind sie jeweils mit gleicher,konstanter Krümmung ausgebildet. Die Strahlendichte und die Krümmung der beiden Kurvenscharen von Fig. 5a und von Fig.5b sind jeweils gleich. In Fig5c sind die beiden Kurvenscharen der Fig.5a und Fig.5b derart überlagert dargestellt, daß die beiden Strahlenmittelpunkte geringfügig im Abstand I>0mm versetzt zueinander ausgebildet sind. Auf diese Weise entsteht ein Interferenzbild der beiden Kurvenscharen, wobei im Bereich von Unienschnittpunkten besonders helle Bereiche entstehen. Das gesamte Interferenzbild zeigt dabei eine Helligkeitsverteilung wie bei einer wellenförmigen Ausbreitung mit stehender Welle.

Ein Teilbereich dieses Bildes ist auf dem Seitenwanddekor gemäß Fig.4 abgebildet. Im Seitenwanddekor sind dabei die dunklen Linien der Kurvenscharen feine geprägte oder erhabene Rillen in der Gummioberfläche. Die Rillen weisen eine runde oder eckige Querschnittskontur auf.

Die unregelmäßige Helligkeitsverteilung, die durch den Moire-effekt auf der Seitenwand erzeugt wird, überlagert die durch die Reifenseitenwandeinschnürung erzeugte Abweichung in der Helligkeitsverteilung. Die durch die Reifenseitenwandeinschnürung erzeugte Abweichung in der Helligkeitsverteilung ist als solche nicht mehr eindeutig identifizierbar. Erkennbar ist lediglich eine offensichtlich durch das Reifendekor erzeugte ungleichmäßige Helligkeitenverteilung.

Fig5d zeigt ein Interferenzbild gemäß Fig 5c, jedoch mit dicker ausgebildeten Linien der Kurvenscharen.

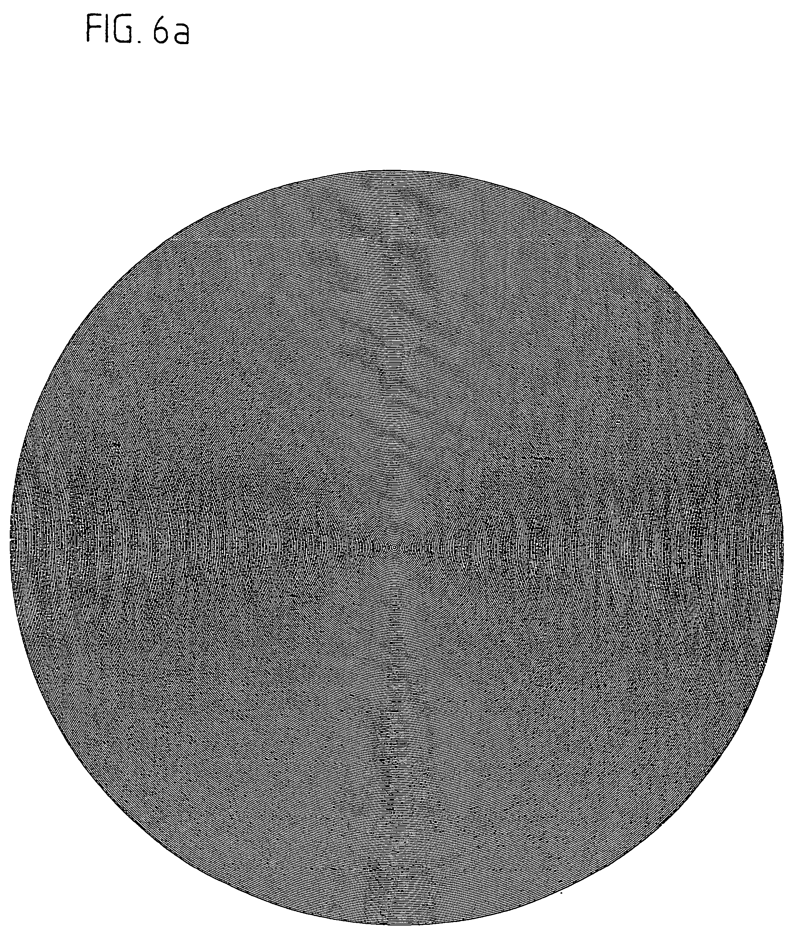

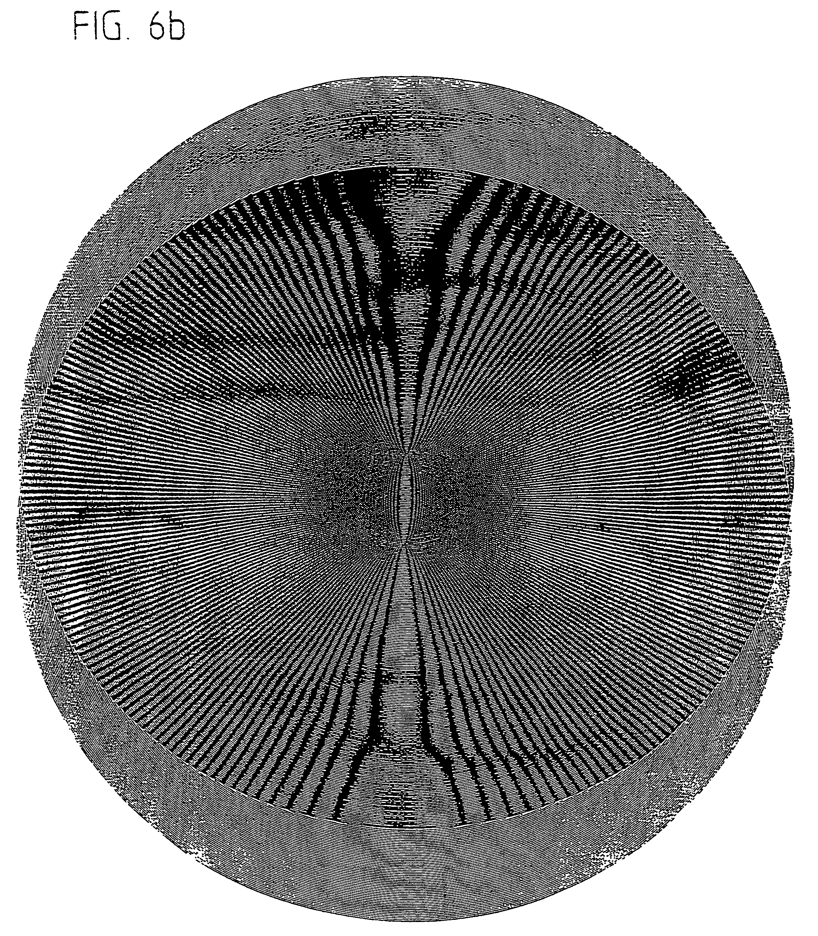

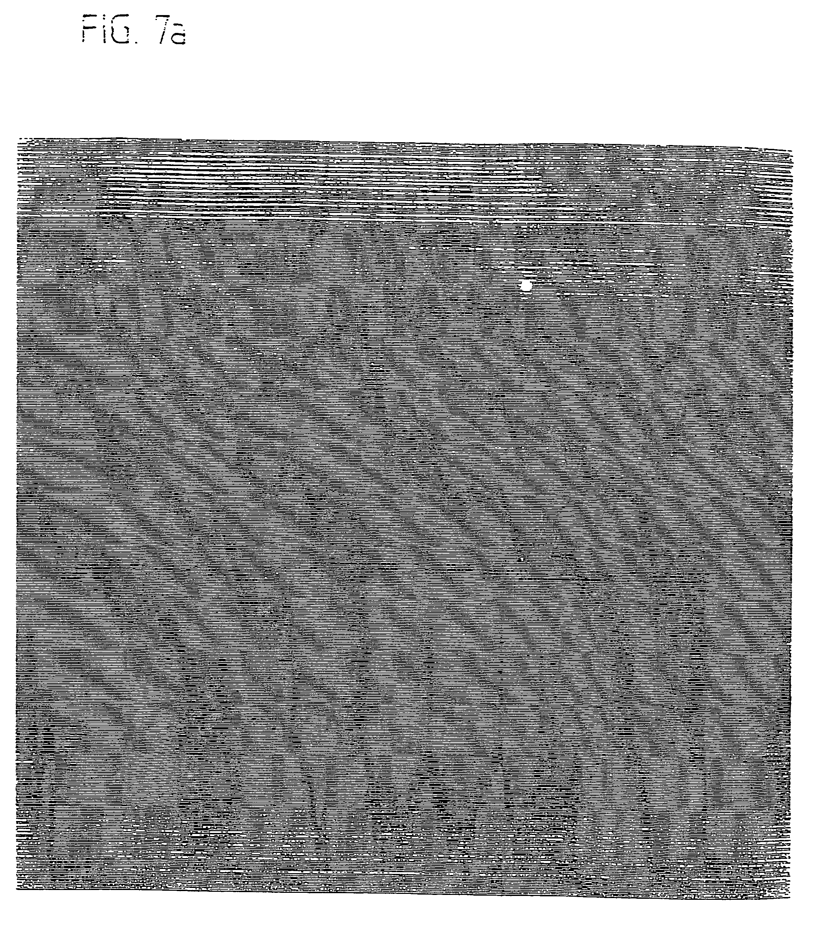

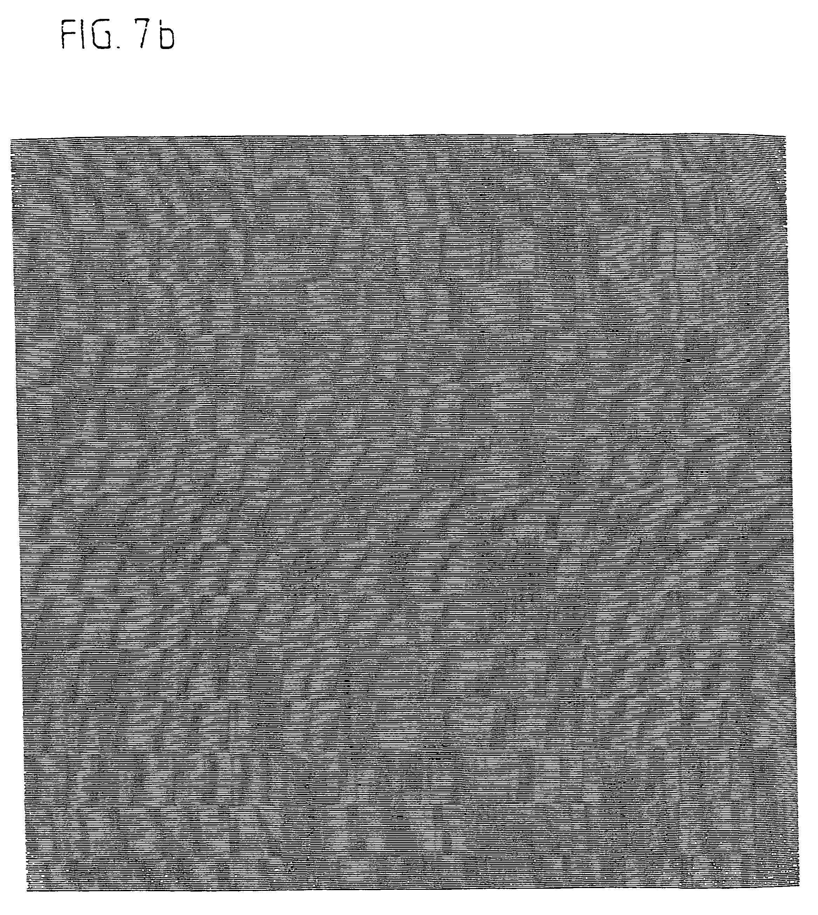

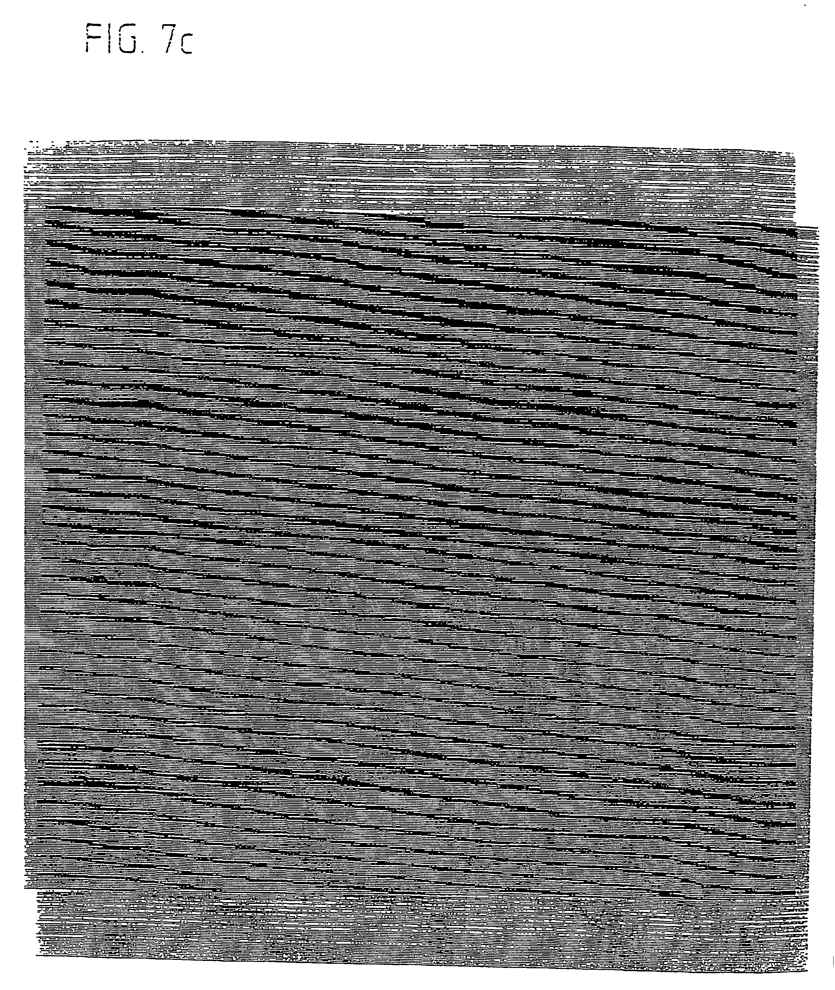

Fig. 6 und Fig.7 zeigen jeweils eine alternative Ausführung des Interferenzbildes. Gemäß Fig. 6b ist das Moire-Muster durch Überlagerung zweier in Fig. 6a mit Linienabstandsunterschieden von 1,01≤a≤1,1 dargestellten Kurvenscharen erzeugt, wobei jede Kurvenschar eine Schar konzentrischer, jeweils mit gleichem radialen Abstand zueinander ausgebildeter Kreise ist, und die beiden Mittelpunkte mit Abstand l > 0mm zueinander versetzt sind. Fig7c zeigt ein Interferenzbild von einer in Fig. 7a gezeigten ersten Kurvenschar paralleler mit einem Abstand L1 äquidistant zueinander ausgebildeten Kurven und einer zweiten in Fig. 7b gezeigten Kurvenschar paralleler mit einem Abstand L2 äquidistant zueinander ausgebildeten Kurven. Die Kurven der ersten Kurvenschar können, wie in Fig. 7c beispielhaft dargestellt, die der zweiten Kurvenschar schneiden. In diesem Fall können die Abstände L1 und L2 gleich sein. Die Kurven der ersten Kurvenschar können jedoch auch parallel zu denen der zweiten Kurvenschar ausgebildet. In diesem Fall sind die Abstände l1 zwischen den Kurven der ersten Kurvenschar größer als die Abstände l2 zwischen den Kurven der zweiten Kurvenschar, wobei 1,1*|2≥|1≥1,01*|2.

Es ist auch denkbar, Karkaßfäden aus anderem Material als aus Polyesterfäden auszubilden. Besonders sinnvoll ist ein Reifenseitenwanddekor mit Moire-Muster bei Reifen auszubilden, bei denen eine besonders große Gefahr erkennbarer Einschnürungen auftritt.

### Bezugszeichenliste

- 1.: Laufstreifen
- 2.: Kern
- 3.: Wulstverstärker
- 4.: Kern-Profil
- 5.: Horn-Profil
- 6.: Innenschicht
- 7.: Seitenstreifen
- 8.: Karkassenlage
- 9.: Karkassenlage
- 10.: Schulterstreifen
- 11.: Gürtellage
- 12.: Gürtelkantenschutz
- 13.: Gürtellage
- 14.: Gürtellage
- 15.: Karkaßfaden
- 16.: Karkaßfaden
- 17.: Überlappungsstellen
- 18.: Überlappungsstellen
- 19.: Kautschukschicht
- 20.: Wulststreifen
- 30.: Seitenwanddekor

## Patentansprüche

1. Fahrzeugluftreifen mit einer Karkasse - insbesondere radialer Bauart -, mit Seitenwänden und mit einem Laufstreifen,
- wobei die Karkasse aus wenigstens einer Karkassenlage mit parallelen in Gummi eingebetteten textilen Festigkeitsträgern und mit wenigstens einer Überlappungsstelle von zwei in Umfangsrichtung des Fahrzeugluftreifens überlappten Karkassenlagenenden im Seitenwandbereich ausgebildet ist,
- wobei die Karkasse im Seitenwandbereich mit einem Seitenwandgummistreifen nach außen hin abgedeckt ist,
- wobei auf dem Seitenwandgummistreifen ein Moiree-Muster aus einer Vielzahl von linienförmigen Erhebungen, die wenigstens zwei nicht identischen Kurvenscharen zuzuordnen sind, ausgebildet ist.

2. Fahrzeugluftreifen gemäß den Merkmalen von Anspruch 1,
- wobei wenigstens eine Kurvenschar aus jeweils parallel zueinander ausgebildeten Kurven ausgebildet sind.

3. Fahrzeugluftreifen gemäß den Merkmalen von Anspruch 2,
- wobei die Kurven wenigstens zweier Kurvenscharen aus jeweils parallel zueinander ausgebildeten Kurven ausgebildet sind.

4. Fahrzeugluftreifen gemäß den Merkmalen von Anspruch 3,
- wobei die Kurven wenigstens zweier Kurvenscharen aus jeweils parallel zueinander ausgebildeten Kurven ausgebildet sind, wobei sich die beiden Kurvenscharen schneiden.

5. Fahrzeugluftreifen gemäß den Merkmalen von Anspruch 2,
- wobei die Kurven wenigstens zweier Kurvenscharen aus jeweils parallel zueinander ausgebildeten geradlinigen Kurven ausgebildet sind.

6. Fahrzeugluftreifen gemäß den Merkmalen von Anspruch 3 oder 5,
- wobei die Kurven beider Kurvenscharen parallel zueinander ausgebildet sind und die Kurven der ersten Kurvenschar im Abstand r1 zueinander und die Kurven der zweiten Kurvenschar im Abstand r2 zueinander ausgebildet sind, wobei für r1 und r2 gilt:
r1= a * r2 , wobei a keine ganze Zahl ist (a ∉ Z).

7. Fahrzeugluftreifen gemäß den Merkmalen von Anspruch 1,
- wobei wenigstens eine Kurvenschar - insbesondere beide Kurvenscharen - aus jeweils punktsymmetrisch ausgebildeten Kurven ausgebildet sind.

8. Fahrzeugluftreifen gemäß den Merkmalen von Anspruch 7,
- wobei die Symmetriepunkte der punktsymmetrischen Kurvenscharen in einem Abstand d zueinander versetzt ausgebildet sind.

9. Fahrzeugluftreifen gemäß den Merkmalen von Anspruch 7 oder 8,
- wobei die Kurven wenigstens einer Kurvenschar konzentrische Kreise sind.

10. Fahrzeugluftreifen gemäß den Merkmalen von Anspruch 9,
- wobei die Kurven wenigstens zweier Kurvenscharen konzentrische Kreise mit gleichem Mittelpunkt sind und die Kurven der ersten Kurvenschar im radialen Abstand r1 zueinander und die Kurven der zweiten Kurvenschar im radialen Abstand r2 zueinander ausgebildet sind, wobei für r1 und r2 gilt:
r1= a * r2 , wobei a keine ganze Zahl ist (a ∉ Z).

11. Fahrzeugluftreifen gemäß den Merkmalen von Anspruch 7,
wobei wenigstens eine Kurvenschar als Strahlenschar durch den Symmetriepunkt - mit insbesondere gleichen Winkeln zwischen jeweils benachbarten Strahlen -ausgebildet ist.

12. Fahrzeugluftreifen gemäß den Merkmalen von Anspruch 11,
wobei die Kurven wenigstens zweier Kurvenscharen als Strahlenschar durch den gleichen Symmetriepunkt ausgebildet sind und die benachbarten Strahlen der ersten Kurvenschar mit gleichen Winkeln α zwischen jeweils benachbarten Strahlen und die benachbarten Strahlen der zweiten Kurvenschar mit gleichen Winkeln β zwischen jeweils benachbarten Strahlen ausgebildet sind, wobei für α und β gilt:
α = a *β , wobei b keine ganze Zahl ist (a ∉ Z).

13. Fahrzeugluftreifen gemäß den Merkmalen von Anspruch 6,10 oder 12, wobei 1,01 ≤a≤1,1.

14. Fahrzeugluftreifen gemäß den Merkmalen von Anspruch 1,
wobei die Kurven der Kurvenschar in einem zweidimensionalen Koordinatensystem (x1;x2) senkrecht zu einer Koordinatenlinie (x1) diese an den Nulldurchgängen einer Sinusfunktion f(x1) = sin(x1₀ + b * x1) mit x1₀ = const , b = const schneiden.

15. Fahrzeugluftreifen gemäß den Merkmalen von Anspruch 14,
- wobei die Kurven einer ersten Kurvenschar in einem zweidimensionalen Koordinatensystem (x1;x2) senkrecht zu einer Koordinatenlinie (x1) diese an den Nulldurchgängen einer Sinusfunktion f(x1) = sin(x1₀ + b * x1) mit x1₀ = const, b = const schneiden,
- wobei die Kurven einer zweiten Kurvenschar in einem zweidimensionalen Koordinatensystem (x3;x4) senkrecht zu einer Koordinatenlinie (x3) diese an den Nulldurchgängen einer Sinusfunktion f(x3) = sin(x3₀ + c * x3) mit x3₀ = const , c = const schneiden,
- wobei entweder die Koordinatensysteme (x1;x2), (x3;x4) der Kurvenscharen nicht identisch sind und/oder die Phasenverschiebungen x1₀,x3₀ der Kurvenscharen nicht identisch sind und/oder die Frequenzen b,c der Kurvenscharen nicht identisch sind.

16. Fahrzeugluftreifen gemäß den Merkmalen von Anspruch 15,
wobei für die Frequenzen b und c der Kurvenscharen gilt: b=a*c , wobei a keine ganze Zahl ist (a ∉ Z), wobei insbesondere 1,05≤a≤1,1 gilt.

17. Fahrzeugluftreifen gemäß den Merkmalen von Anspruch 15,
wobei für die die Phasenverschiebungen x1₀,x3₀ der Kurvenscharen gilt: x1₀=a*x3₀, wobei a keine ganze Zahl ist (a ∉ Z), wobei insbesondere 1,05≤a≤1,1 gilt.

18. Fahrzeugluftreifen gemäß den Merkmalen von Anspruch 15,
- wobei wenigstens eines, insbesondere beide, der beiden Koordinatensysteme (x1;x2), (x3;x4) der Kurvenscharen karthesische Koordinatensysteme sind.

19. Fahrzeugluftreifen gemäß den Merkmalen von Anspruch 15,
- wobei wenigstens eines, insbesondere beide, der beiden Koordinatensysteme (x1;x2), (x3;x4) der Kurvenscharen krummlinige Koordinatensysteme sind.

20. Fahrzeugluftreifen gemäß den Merkmalen von Anspruch 15,
- wobei wenigstens eines insbesondere beide, der beiden Koordinatensysteme (x1;x2), (x3;x4) der Kurvenscharen Polarkoordinatensysteme sind.

## Claims

1. Pneumatic vehicle tyre with a casing - in particular of a radial-ply type -, with sidewalls and with a tread rubber,
- the casing being formed by at least one casing ply with parallel textile reinforcements embedded in rubber and with at least one point of overlap of two casing ply ends in the sidewall region overlapped in the circumferential direction of the pneumatic vehicle tyre,
- the casing being covered in the outward direction in the sidewall region by a sidewall rubber strip,
- a moiré pattern being formed on the sidewall rubber strip by a multiplicity of linear elevations, which can be assigned to at least two non-identical groups of curves.

2. Pneumatic vehicle tyre according to the features of Claim 1,
- at least one group of curves being formed by curves respectively formed parallel to one another.

3. Pneumatic vehicle tyre according to the features of Claim 2,
- the curves of at least two groups of curves being formed by curves respectively formed parallel to one another.

4. Pneumatic vehicle tyre according to the features of Claim 3,
- the curves of at least two groups of curves being formed by curves respectively formed parallel to one another, the two groups of curves intersecting.

5. Pneumatic vehicle tyre according to the features of Claim 2,
- the curves of at least two groups of curves being formed by straight curves respectively formed parallel to one another.

6. Pneumatic vehicle tyre according to the features of Claim 3 or 5,
- the curves of both groups of curves being formed parallel to one another and the curves of the first group of curves being formed with the distance r1 from one another and the curves of the second group of curves being formed with the distance r2 from one another, where the following applies for r1 and r2:
r1 = a * r2, with a not being a whole number (a ∉ Z).

7. Pneumatic vehicle tyre according to the features of Claim 1,
- at least one group of curves - in particular both groups of curves - being formed by curves respectively formed point-symmetrically.

8. Pneumatic vehicle tyre according to the features of Claim 7,
- the points of symmetry of the point-symmetrical groups of curves being formed such that they are offset from one another by a distance d.

9. Pneumatic vehicle tyre according to the features of Claim 7 or 8,
- the curves of at least one group of curves being concentric circles.

10. Pneumatic vehicle tyre according to the features of Claim 9,
- the curves of at least two groups of curves being concentric circles with the same centre point and the curves of the first group of curves being formed at the radial distance r1 from one another and the curves of the second group of curves being formed at the radial distance r2 from one another, where the following applies for r1 and r2:
r1 = a * r2, with a not being a whole number (a ∉ Z).

11. Pneumatic vehicle tyre according to the features of Claim 7,
- at least one group of curves being formed as a group of radiating lines through the point of symmetry - with in particular the same angles between respectively neighbouring radiating lines.

12. Pneumatic vehicle tyre according to the features of Claim 11,
- the curves of at least two groups of curves being formed as a group of radiating lines through the same point of symmetry and the neighbouring radiating lines of the first group of curves being formed with the same angles α between respectively neighbouring radiating lines and the neighbouring radiating lines of the second group of curves being formed with the same angles β between respectively neighbouring radiating lines, where the following applies for α and β:
α = a * β, with a not being a whole number (a ∉ Z).

13. Pneumatic vehicle tyre according to the features of Claim 6, 10 or 12, where 1.01 ≤ a ≤ 1.1.

14. Pneumatic vehicle tyre according to the features of Claim 1,
- the curves of the group of curves in a two-dimensional system of coordinates (x1; x2) intersecting a coordinate line (x1) perpendicularly thereto at the zero crossings of a sine function f(x1) = sin(x1₀ + b * x1) where x1₀ = const, b = const.

15. Pneumatic vehicle tyre according to the features of Claim 14,
- the curves of a first group of curves in a two-dimensional system of coordinates (x1; x2) intersecting a coordinate line (x1) perpendicularly thereto at the zero crossings of a sine function f(x1) = sin(x1₀ + b * x1) where x1₀ = const, b = const,
- the curves of a second group of curves in a two-dimensional system of coordinates (x3; x4) intersecting a coordinate line (x3) perpendicularly thereto at the zero crossings of a sine function f(x3) = sin(x3₀ + c * x3) where x3₀ = const, c = const,
- either the systems of coordinates (x1; x2), (x3; x4) of the groups of curves not being identical and/or the phase displacements x1₀, x3₀ of the groups of curves not being identical and/or the frequencies b, c of the groups of curves not being identical.

16. Pneumatic vehicle tyre according to the features of Claim 15,
- the following applying for the frequencies b and c of the groups of curves: b = a * c, where a is not a whole number (a ∉ Z), with in particular 1.05 ≤ a ≤ 1.1.

17. Pneumatic vehicle tyre according to the features of Claim 15,
- the following applying for the phase displacements x1₀, x3₀ of the groups of curves: x1₀ = a * x3₀, where a is not a whole number (a ∉ Z), with in particular 1.05 ≤ a ≤ 1.1.

18. Pneumatic vehicle tyre according to the features of Claim 15,
- at least one, in particular both, of the two systems of coordinates (x1; x2), (x3; x4) of the groups of curves being systems of Cartesian coordinates.

19. Pneumatic vehicle tyre according to the features of Claim 15,
- at least one, in particular both, of the two systems of coordinates (x1; x2), (x3; x4) of the groups of curves being systems of curvilinear coordinates.

20. Pneumatic vehicle tyre according to the features of Claim 15,
- at least one, in particular both, of the two systems of coordinates (x1; x2), (x3; x4) of the groups of curves being systems of polar coordinates.

## Revendications

1. Pneu de véhicule, qui présente une carcasse, en particulier à structure radiale, des parois latérales et une bande de roulement,
- dans lequel la carcasse est constituée d'au moins une couche de carcasse qui présente des supports textiles de renforcement incorporés parallèlement dans du caoutchouc et présente au moins un emplacement de superposition de deux extrémités de couche de carcasse qui se superposent dans la direction du pourtour du pneu de véhicule dans la zone de ses parois latérales,
- dans lequel, dans la zone des parois latérales, le côté extérieur de la carcasse est recouvert par une bande de caoutchouc de parois latérales et
- dans lequel la bande de caoutchouc des parois latérales présente une configuration moirée constituée de plusieurs reliefs linéaires auxquels sont associées au moins deux familles non identiques de courbes.

2. Pneu de véhicule selon les caractéristiques de la revendication 1,
- dans lequel au moins une famille de courbes est constituée de courbes mutuellement parallèles.

3. Pneu de véhicule selon les caractéristiques de la revendication 2,
- dans lequel les courbes d'au moins deux familles de courbes sont chaque fois mutuellement parallèles.

4. Pneu de véhicule selon les caractéristiques de la revendication 3,
- dans lequel les courbes d'au moins deux familles de courbes sont chaque fois mutuellement parallèles, les deux familles de courbes se croisant.

5. Pneu de véhicule selon les caractéristiques de la revendication 2,
- dans lequel les courbes d'au moins deux familles de courbes sont toutes des courbes rectilignes et mutuellement parallèles.

6. Pneu de véhicule selon les caractéristiques des revendications 3 ou 5,
- dans lequel les courbes des deux familles de courbes sont mutuellement parallèles, les courbes de la première famille de courbes étant agencées à distance r1 les unes des autres et les courbes de la deuxième famille de courbes à distance r2 les unes des autres, avec r1 = a * r2 pour r1 et r2, a n'étant pas un nombre entier (a ∉ Z).

7. Pneu de véhicule selon les caractéristiques de la revendication 1,
- dans lequel au moins une famille de courbes et en particulier les deux familles de courbes sont constituées de courbes à symétrie centrale.

8. Pneu de véhicule selon les caractéristiques de la revendication 7,
- dans lequel les centres de symétrie des familles de courbes centralement symétriques sont situés à une distance d l'un de l'autre.

9. Pneu de véhicule selon les caractéristiques des revendications 7 ou 8,
- dans lequel les courbes d'au moins une famille de courbes sont des cercles concentriques.

10. Pneu de véhicule selon les caractéristiques de la revendication 9,
- dans lequel les courbes d'au moins deux familles de courbes sont des cercles concentriques, les courbes de la première famille de courbes étant agencées à distance radiale r1 les unes des autres et les courbes de la deuxième famille de courbes à distance radiale r2 les unes des autres, avec r1 = a * r2 pour r1 et r2, a n'étant pas un nombre entier (a ∉ Z).

11. Pneu de véhicule selon les caractéristiques de la revendication 7,
- dans lequel au moins une famille de courbes est une famille de rayons qui passent par le centre de symétrie et dont l'angle entre rayons voisins reste en particulier le même pour toutes les paires de rayons voisins.

12. Pneu de véhicule selon les caractéristiques de la revendication 11,
- dans lequel les courbes d'au moins deux familles de courbes sont des familles de rayons qui passent par le même centre de symétrie, les rayons de toute paire de rayons voisins de la première famille de courbes présentant entre eux le même angle α et les rayons de toute paire de rayons voisins de la première famille de courbes présentant entre eux le même angle β, avec α = a * β pour α et β, a n'étant pas un nombre entier (a ∉ Z).

13. Pneu de véhicule selon les caractéristiques des revendications 6, 10 ou 12,
- dans lequel 1,01 ≤ a ≤ 1,1.

14. Pneu de véhicule selon les caractéristiques de la revendication 1,
- dans lequel, dans un système bidimensionnel de coordonnées (x1; x2), les courbes de la famille de courbes coupent perpendiculairement l'axe de coordonnées (x1) aux points où la fonction sinusoïdale f(x1) = sin(x1₀ + b * x1) prend une valeur nulle, x1₀ = constante et b = constante.

15. Pneu de véhicule selon les caractéristiques de la revendication 14,
- dans lequel, dans un système bidimensionnel de coordonnées (x1; x2), les courbes d'une première famille de courbes coupent perpendiculairement l'axe de coordonnées (x1) aux points où la fonction sinusoïdale f(x1) = sin(x1₀ + b * x1) prend une valeur nulle, x1₀ = constante et b = constante,
- dans lequel, dans un système bidimensionnel de coordonnées (x3; x4), les courbes d'une deuxième famille de courbes coupent perpendiculairement l'axe de coordonnées (x3) aux points où la fonction sinusoïdale f(x3) = sin(x3₀ + c * x3) prend une valeur nulle, x3₀ = constante et c = constante,
- dans lequel les systèmes de coordonnées (x1; x2) et (x3; x4) des familles de courbes, les déphasages x1₀ et x3₀ des familles de courbes et/ou les fréquences b et c des familles de courbes ne sont pas identiques.

16. Pneu de véhicule selon les caractéristiques de la revendication 15,
- dans lequel, pour les fréquences b et c des familles de courbes, on a b = a * c où a n'est pas un nombre entier (a ∉ Z) et en particulier 1,05 ≤ a ≤ 1,1.

17. Pneu de véhicule selon les caractéristiques de la revendication 15,
- dans lequel, pour les déphasages x1₀ et x3₀ des familles de courbes, on a x1₀ = a * x3₀ où a n'est pas un nombre entier (a ∉ Z) et en particulier 1,05 ≤ a ≤ 1,1.

18. Pneu de véhicule selon les caractéristiques de la revendication 15,
- dans lequel au moins un et en particulier les deux systèmes de coordonnées (x1; x2), (x3; x4) des familles de courbes sont cartésiens.

19. Pneu de véhicule selon les caractéristiques de la revendication 15,
- dans lequel au moins un et en particulier les deux systèmes de coordonnées (x1; x2), (x3; x4) des familles de courbes sont curvilignes.

20. Pneu de véhicule selon les caractéristiques de la revendication 15,
- dans lequel au moins un et en particulier les deux systèmes de coordonnées (x1; x2), (x3; x4) des familles de courbes sont polaires.
